# EUROPÄISCHE PATENTANMELDUNG

(11) **EP 4 575 558 A1**
(43) Veröffentlichungstag der Anmeldung: **25.06.2025**
(21) Anmeldenummer: 24220113.5
(22) Anmeldetag: 16.12.2024
(51) Int. Cl.: G01S 7/41, G01S 17/88, G01S 13/75, G01S 17/00, G01S 13/52, G01S 13/00, G01S 7/497, G01S 13/82, G01S 13/88, G01S 7/4915, G01S 13/76, G01S 17/74, G01S 7/40, G01S 7/48, G01S 13/20, G01S 17/46

(54) **VERFAHREN ZUR DETEKTION VON FREMDKÖRPERN IN EINEM PARTIKEL-GAS-GEMISCH UND RADAR-MESSVORRICHTUNG**

(30) Priorität: 20.12.2023 DE 102023136066
(71) Anmelder: CiTEX Holding GmbH, 49324 Melle (DE)
(72) Erfinder: Dr. Thiel, Marius, 49088 Osnabrück (DE)
(74) Vertreter: Bremer, Ulrich

(57) **Zusammenfassung**

Die Erfindung betrifft ein Verfahren zur Detektion von Fremdkörpern (14) in einem Partikel-Gas-Gemisch (2), z.B. Schüttgut oder einem Materialstrom, mit mindestens folgenden Schritten:
- Zuführen es Partikel-Gas-Gemisches (2) aus Partikeln (4) in einem Gas (3) durch einen Messraum (11) zwischen einem Radar-Sender, z.B. Radar-Transceiver (7), und einem Radar-Gegenpunkt, z.B. Reflektor (9), einer Radar- Messvorrichtung (6)
- Radarmessung, bei der von dem Radar- Sender (7) Radarstrahlen (8) entlang seiner optischen Achse (A) durch den Messraum (11) und das Partikel-Gas-Gemisch (2) zu dem Radar-Gegenpunkt (9) ausgegeben werden und Messtrahlen, die den Messraum (11) zumindest einmal durchquert haben, gemessen werden,
wobei ein Messsignal (S1) mit einer Signalamplitude (S) erzeugt wird, die einen Grundpeak (TP) enthält,
- Auswertung der Signalamplitude (S) und Ermittlung, ob in dem Partikel-Gas-Gemisch (2) ein Fremdkörper (14) oder eine hohe Wahrscheinlichkeit für einen Fremdkörper (14) erkannt wird,
- bei Ermittlung eines Fremdkörpers (14) oder einer hohen Wahrscheinlichkeit für einen Fremdkörper (14) Ausgabe eines Ausgabesignals (W1, W2, W3)

## Beschreibung

Die Erfindung betrifft ein Verfahren zur Detektion von Fremdkörpern in einem Partikel-Gas-Gemisch und eine Radar-Messvorrichtung, insbesondere in einer Förder- und Dosiereinrichtung für einen Extruder.

In Extrusionsstrecken wird den Extrudern im Allgemeinen ein rieselfähiges Schüttgut zugeführt, das von dem Extruder aufgenommen und aufgeschmolzen wird. Hierbei können Fremdkörper in dem Zuführmaterial problematisch sein. Insbesondere Metalle können zu Beschädigungen des Extruders führen. Daher können Fremdkörper grundsätzlich detektiert und ggf. noch im Partikel-Gas-Gemisch ausgesondert werden. Die Detektion derartiger Fremdkörper ist jedoch im Allgemeinen problematisch, da sie in dem Partikel-Gas-Gemisch verdeckt sind und somit schlecht durch optische Verfahren zu ermitteln sind und weiterhin die Transportgeschwindigkeit bzw. Fließgeschwindigkeit des Partikel-Gas-Gemischs oftmals zu hoch ist, um einzelne Partikel genauer zu untersuchen.

Weiterhin sind Vorrichtungen und Verfahren zum Detektieren von Fremdkörpern in Extrusionsprodukten bekannt, bei denen Reflexionen von THz-Strahlung an in dem Extrusionsprodukt eingeschmolzenen Partikeln detektiert werden.

Die DE 10 2019 109 340 A1 beschreibt ein THz-Messverfahren und eine THz-Messvorrichtung zum Erfassen eines Materiestroms, bei denen ein THz-Sendestrahl durch einen THz-Sensor erzeugt wird und durch den Materiestrom entlang mindestens einer ersten optischen Achse geführt wird, wobei der durch den Materiestrom getretene THz-Sendestrahl durch mindestens einen Reflektor-Spiegel reflektiert und nachfolgend detektiert wird, so dass ein Reflektor-Peak in einer Signalamplitude ermittelt werden kann. Nachfolgend wird die Signalamplitude bewertet, wobei auch zunächst vorab eine Kalibriermessung ohne Materiestrom durchgeführt werden kann.

Die DE 20 2019 106 368 U1 beschreibt eine Vorrichtung zum Erkennen von Fremdkörpern durch ein optisches Verfahren, mittels einer Beleuchtungseinrichtung, einem Reflexionselement und mindestens einer Kamera.

DE 10 2016 123 453 A1 beschreibt eine Einrichtung und ein Verfahren zur Messung von Partikeln mit einer Radareinheit, bei der eine Sendeantenne ein elektromagnetisches Radarmessfeld im Bereich einer Sendekeule aussendet und reflektiert Radarwellen mittels einer Empfangsantenne im räumlichen Bereich einer Empfangskeule empfängt, wobei sich die Sendekeule und Empfangskeule in einem Detektionsraum überlappen.

Die DE 20 2021 103 695 U1 betrifft eine Vorrichtung zum Erkennen von Fremdkörpern in einem Förderstrom eines Schüttguts, mit einer Beleuchtungseinrichtung, einem flächigen Reflexionselement sowie mindestens einer auf einen Detektionsbereich gerichteten Kamera.

Der Erfindung liegt die Aufgabe zugrunde, ein Verfahren zur Detektion von Fremdkörpern in Förder- und Dosiereinrichtungen und eine Radar-Messvorrichtung zu schaffen, die mit geringem Aufwand eine Erfassung von Fremdkörpern ermöglichen.

Diese Aufgabe wird durch ein Verfahren zur Detektion von Fremdkörpern und eine Radar-Messvorrichtung nach den unabhängigen Ansprüchen gelöst. Die Unteransprüche beschreiben bevorzugte Weiterbildungen.

Das erfindungsgemäße Verfahren zur Detektion von Fremdkörpern kann insbesondere mit einer erfindungsgemäßen Förder- und Dosiereinrichtung und/oder erfindungsgemäßen Radar-Messvorrichtung durchgeführt werden. Die erfindungsgemäße Radar-Messvorrichtung und erfindungsgemäße Förder- und Dosiereinrichtung sind insbesondere zur Durchführung eines erfindungsgemäßen Verfahrens vorgesehen.

Somit wird ein Partikel-Gas-Gemisch, z.B. ein Materialstrom oder ein Schüttgut, in einer Förder- oder Dosiereinrichtung mittels Radar- bzw. THz-Strahlung vermessen. Hierbei sendet ein Radar-Sender Radarstrahlen durch einen Messraum der Förder- und Dosiereinrichtung, so dass die Radarstrahlen durch den Messraum zu einem Radar-Gegenpunkt gelangen und eine Vermessung des Messraums erfolgt.

Gemäß einer ersten Ausbildung ist der Radar-Sender als Radar-Transceiver und der Radar-Gegenpunkt als Reflektor ausgebildet, der die Radarstrahlen zurück durch den Messraum zu dem Radar-Transceiver reflektiert, so dass der Messraum zweimal durchquert wird. Somit ist insbesondere eine kostengünstige Vermessung möglich, insbesondere mittels FMCW-Radar, das den Einsatz eines kostengünstigen Messchips ermöglicht.

Der Radar-Transceiver kann die Radarstrahlen insbesondere im Frequenzbereich von 10 GHz bis 50 THz ausgeben, insbesondere als frequency modulated continuous wave (FMCW) oder gepulste Radar- oder THZ-Strahlung. Der Sensor kann vorteilhafterweise als Transceiver ausgeführt sein, aber auch diskret als Sender- und Empfangseinheit getrennt sein.

Der Reflektor kann insbesondere auch als Teil der Materialführung ausgeprägt sein, z.B. als spiegelnde Innenfläche, sodass zum einen eine weitere Kostensenkung ermöglicht wird und weiterhin die Radarstrahlen an der gegenüberliegenden Seite keine Rohrwand oder ähnliche Führung durchqueren müssen.

Der Radar-Transceiver auf der Sender-Seite kann auch gebildet werden durch eine Kombination eines Radar-Senders mit einem Radar- Receiver und einem halbdurchlässigen Spiegel, der die Radarstrahlen von dem Radar-Sender auf die optische Achse und von der optischen Achse zu dem Radar-Empfänger leitet, z.B. für gepulste THZ- oder Radarstrahlung.

Gemäß einer weiteren Ausbildung ist eine Messung in Transmission vorgesehen, bei der der Radar-Gegenpunkt als Radar-Receiver bzw. Radar-Empfänger ausgebildet, der die vom Radar-Sender ausgesandten Radarstrahlen nach einmaligem Durchqueren des Messraums misst. Bei einer derartigen Transmissionsmessung ist vorzugsweise eine Synchronisation von Radar-Receiver und Radar-Sender vorgesehen. Da der Messraum nur einmal durchquert wird, erfolgt somit nur eine geringere Abschwächung.

Derartige Messanordnungen sind bei Vermessung von z. B. extrudierten Strängen oder Folien bekannt; hier können z. B. Schichtdicken durch Laufzeitunterschiede zwischen Grenzflächen ermittelt werden. Derartige Radar-Messvorrichtungen arbeiten zuverlässig und kostengünstig.

Erfindungsgemäß wird das Partikel-Gas-Gemisch während der Zuführung, d. h. insbesondere inline während des Extrusionsprozesses, vermessen, wobei aus der Signalamplitude des Radar-Transceivers direkt oder indirekt auf einen relevanten Fremdkörper geschlossen werden kann. Bei der Auswertung der Signalamplitude kann insbesondere auch die Signalphase ausgewertet werden, insbesondere bei einem FMCW-Radarstrahl.

Hierbei wird erfindungsgemäß erkannt, dass die typische Signalamplitude bzw. das Messsignal eines Radar-Transceivers direkte und indirekte Hinweise auf das Vorliegen von Fremdkörpern, insbesondere metallischen Fremdkörpern, ermöglicht. Aus den direkten oder indirekten Hinweisen kann dann auf das Vorliegen oder eine hohe Wahrscheinlichkeit für ein Vorliegen eines Fremdkörpers geschlossen werden.

Als hohe Wahrscheinlichkeit wird insbesondere eine ermittelte Wahrscheinlichkeit verstanden, die oberhalb eines Grenzwertes liegt.

Partikel eines Partikel-Gas-Gemisches, z.B. eines Materialstroms, zur Zuführung zu einem Extruder sind im Allgemeinen aus einem für Radarstrahlung bzw. THz-Strahlung durchlässigen Material gebildet. Bei der Radar-Vermessung eines Partikel-Gas-Gemisches in Reflexion treten zunächst Teilreflexionen an Grenzflächen der Partikel auf, die zum Teil entlang der optischen Achse zu dem Transceiver zurück reflektiert werden und in dem Messignal als Teilreflexionen auftreten. Da das Partikel-Gas-Gemisch bzw. der Materialstrom eine hohe Anzahl kleiner Partikel enthält, wird im Allgemeinen eine entsprechende Anzahl von Partikeln eines Materialstroms zu dem Messignal beitragen, das somit ein statistisches Rauschen bzw. eine Streuung aufweist.

Bei der Ausführungsform mit Reflektor tritt in dem Messsignal bzw. der Signalamplitude weiterhin ein deutlicher Totalreflexionspeak des Reflektors auf, wobei die Teilreflexionen zeitlich in einem mittleren Diagrammbereich des Messignals vor dem Totalreflexionspeak liegen. Erfindungsgemäß ist vorteilhafterweise eine Detektion eines Fremdkörpers in dem mittleren Diagrammbereich der Teilreflektionen und/oder in dem Bereich des Totalreflexionspeaks möglich.

Der Totalreflexions-Peak stellt eine signifikante Reflektion am gegenüberliegenden Punkt des Messraums dar, insbesondere eine vollständige Reflexion, z.B. an einem Metall-Spiegel. Grundsätzlich kann der Totalreflexions-Peak aber auch durch einen Reflektor aus einem nicht ganz vollständig reflektierenden Material gebildet werden, insbesondere auch durch ein Teil des Führungsbereichs, z.B. eines Führungsrohres. Der Begriff "Totalreflexionspeak" bezieht sich somit auf die Reflektion der Radarstrahlen als eindeutigen Bezugspunkt hoher Intensität, auch wenn keine 100%-Reflektion vorliegt.

Bei der Ausführungsform in Transmissionsmessung tritt in dem Messsignal statt des Totalreflektionspeaks ein Grundpeak mit einer scharfen Anfangskante und nachfolgendem Abfall auf. Fremdkörper, insbesondere aus Metall, führen zu einer starken Abschwächung des Transmissionssignals, da die Radarstrahlung vollständig von der optischen Achse wegreflektiert wird.

Erfindungsgemäß kann gemäß bei der Ausführungsform in Reflexionsmessung ein Fremdkörper in einem mittleren Diagrammbereich als Reflexionspeak mit hoher Signalamplitude ermittelt werden, da er nicht lediglich eine Teilreflexion, sondern zumindest zeitweise eine Totalreflexion durchführt, die zu einem hohen Peak führt. Somit kann hier die Höhe der Signalamplitude in dem mittleren Diagrammbereich des Partikel-Gas-Gemisches, z.B. Materialstroms herangezogen werden, um direkt einen Fremdkörper, insbesondere aus Metall, zu detektieren.

Weiterhin kann auch eine indirekte Ermittlung erfolgen, bei der aus einer Auswertung des mittleren Diagrammbereichs und/oder des Totalreflexions-Peaks oder eines hinter dem Totalreflexions-Peak gelegenen Bereichs, oder aber des Grundpeaks auf einen Fremdkörper geschlossen werden kann. So führt die Totalreflexion an dem Fremdkörper, auch wenn dieser mit seiner reflektierenden Fläche nicht senkrecht zur optischen Achse liegt, zu einer Schwächung des durchgelassenen Radarstrahls. Somit kann aus einer Verringerung der Signalamplitude des Total-Reflexionspeaks auf eine hohe Wahrscheinlichkeit für das Vorliegen eines Fremdkörpers geschlossen werden.

Zu den Bewertungen kann ergänzend eine Gesamtlaufverzögerung des Total-Reflexionspeaks oder Grundpeaks gegenüber einer Leermessung herangezogen werden, da die Partikel im optischen Pfad zu einer Verschiebung des Total-Reflexionspeaks oder Grundpeaks führen, die somit zur Ermittlung der Materialmenge verwendet werden kann.

Weiterhin kann bei der Reflexionsmessung auch das Verhältnis bzw. der Quotient eines integrierten Wertes des mittleren Diagrammbereichs zu dem Totalreflexions-Peak gebildet werden, wodurch eine eindeutigere Bestimmung möglich ist. Insbesondere zeitweise Reflexionen von den Fremdkörpern zurück zum Transceiver können zu einer Erhöhung des Signals im mittleren Diagrammbereich und gleichzeitig zu einer Verringerung des Totalreflexions-Peaks führen, so dass durch Bildung des Verhältnisses bzw. Quotienten dieser Größen eine hohe Signifikanz erreicht wird. Bei der Transmissionsmessung kann entsprechend ein Verhältnis bzw. Quotient eines Diagrammbereichs, z.B. einer hinteren Flane, zu dem Grundpeak gebildet und bewertet werden.

Erfindungsgemäß wird insbesondere auch erkannt, dass eine genaue bzw. hundertprozentige Detektion eines Fremdkörpers nicht erforderlich ist. Grundsätzlich ist es hilfreich, bereits bei einer hohen Wahrscheinlichkeit oder Signifikanz für einen Fremdkörper ein Warnsignal auszugeben oder z. B. durch die Entnahmeeinrichtung einen Teil des Partikel-Gas-Gemisches zu entfernen, da der Verlust einer gewissen Anzahl von Partikeln im Allgemeinen nicht so problematisch ist, insbesondere verglichen mit den Kosten bei einer Verunreinigung des Extrusionsproduktes oder auch dem Anhalten des Extruders bzw. der Fertigungsstrecke. Somit kann insbesondere schon bei der Ermittlung einer hohen Wahrscheinlichkeit, bzw. einer Wahrscheinlichkeit oberhalb eines Grenzwertes und/oder bei einer Signifikanz oberhalb eines Grenzwertes, ein entsprechendes Steuersignal ausgegeben und z. B. die Entnahmeeinrichtung aktiviert werden.

Gemäß einer weiteren Ausbildung kann ein zeitlicher Vergleich des mittleren Diagrammbereichs über mehrere Messungen erfolgen. So kann die Intensität des mittleren Diagrammbereichs verglichen werden mit vorherigen und nachfolgenden Zeiten, so dass z. B. der Beitrag einer Reflexion an einem Fremdkörper spezifischer erkannt werden kann. Hierbei können als statistische Verfahren z. B. eine Signifikanz oder ein Mittelwert über die mehreren Messungen verwendet werden.

Gemäß einer weiteren erfindungsgemäßen Ausbildung wird der Totalreflexions-Peak bzw. ein Bereich des Totalreflexions-Peaks, insbesondere ein hinterer Flankenbereich des Totalreflexions-Peaks, bewertet. Hierbei können an Fremdkörpern wie z. B. Metallen zusätzliche Reflexionen auftreten, die in dem Messsignal bzw. der Signalamplitude als Mehrfach-Reflexionen detektiert werden können. Mehrfach-Reflexionen an Grenzflächen der Partikel, d. h. des Schüttgutes, tragen im Allgemeinen nur wenig zu der ermittelten Signalamplitude bei, da im Allgemeinen nur kleine Anteile von 1 bis 5 % der einfallenden Intensität teilreflektiert wird. Mehrfach-Reflexionen an metallischen Fremdkörpern tragen hingegen deutlich zur Intensität bei; so kann z. B. der Radarstrahl an dem Reflektor reflektiert und nachfolgend an einem Fremdkörper zurück zu dem Reflektor reflektiert werden, so dass diese Mehrfach-Reflexion in dem Signaldiagramm als ein Signalbeitrag nach dem Totalreflexions-Peak bzw. an einer hinteren Flanke des Totalreflexions-Peaks in Erscheinung tritt. Somit können an der hinteren Flanke bzw. einem nachfolgenden Bereich des Totalreflexions-Peaks Aussagen über starke Reflexionen, insbesondere an Fremdkörpern, getroffen werden. Hierzu kann eine statistische oder typologische Bewertung der Struktur des hinteren Flankenbereichs des Totalreflexions-Peaks erfolgen, insbesondere als komplexere Strukturbewertung. So können hier z. B. statistische Beiträge durch übliche Grenzflächen als charakteristischer Flankenbereich erfasst werden, demgegenüber dann Beiträge durch Mehrfach-Reflexionen an einem metallischen Fremdkörper als Abweichung hiervon erkannt werden können.

Bei der Ausführungsform in Transmissionsmessung wird entsprechend insbesondere der hintere Flankenbereich des Grundpeaks bewertet, wobei hier entsprechende Auswertungen wie die oben beschriebenen Auswertung des mittleren Diagrammbereichs bei der Reflexionsmessung erfolgen können.

Erfindungsgemäß können somit mit geringem zusätzlichen Hardware-Aufwand, insbesondere auch an sich bekannten Messvorrichtungen und Systemen, Aussagen über Fremdkörper getroffen werden. Die Detektion von Fremdkörpern kann somit zusätzlich zu der Vermessung des Partikel-Gas-Gemisches erfolgen, z. B. Ermittlung eines Durchsatzes. Hierbei kann z. B. bereits eine höhere Signifikanz zur Ermittlung eines Fremdkörpers genutzt werden, um z. B. ein Warnsignal auszugeben, eine noch höhere Signifikanz zur Ausgabe des Entnahmesignals führen, um die Entnahmeeinrichtung anzusteuern, und eine sehr hohe Signifikanz bzw. ein sicheres Erkennen eines Fremdkörpers gegebenenfalls zum Anhalten des Extruders führen.

Erfindungsgemäß kann weiterhin eine Doppler-Messung mit einbezogen werden, bei der der ausgegebene Radarstrahl nicht senkrecht zur Förderrichtung verläuft, sondern mit einer Geschwindigkeitskomponente hierzu, so dass durch den Doppler-Effekt hier auf eine Geschwindigkeit der erfassten Partikel geschlossen werden kann. Hierbei wird weiterhin die Wegstrecke des Radarstrahls in dem Messraum gegenüber einem senkrechten Durchstrahlen vergrößert, so dass bereits hierdurch genauere Aussagen über das Partikel-Gas-Gemisch getroffen werden können. Weiterhin kann hierdurch ein Fremdkörper über den Signalpeak seiner Transportgeschwindigkeit in der Doppler-Messung erfasst werden. So kann ein schweres Metallpartikel z. B. schneller durch den Luftstrom fallen und somit einen deutlichen Beitrag bereits im Doppler-Signal liefern.

Als Partikel-Gas-Gemisch kann zum einen ein Materialstrom, insbesondere mit in einem Luftstrom aufgenommenen bzw. von dem Luftstrom mitgerissenen Partikeln vermessen werden. Weiterhin kann auch von einer Materialausgabe ausgegebenes Schüttgut vermessen werden, das z.B. fällt und/oder rutscht, insbesondere durch die Schwerkraft oder eine externe Krafteinleitung. Hierbei wird dann ein Gemisch aus dem Schüttgut und der Luft vermessen. Somit kann für die Führung bzw. die Materialzuführung auch z.B. eine Rüttelplatte, eine Rutsche, ein Trichter oder eine Förderschnecke eingesetzt werden.

Die Erfindung betrifft weiterhin eine Förder- und Dosiereinrichtung für ein Partikel-Gas-Gemisch zur Zuführung zu einem Extruder, wobei die Förder- und Dosiereinrichtung aufweist:
eine Führung für ein Partikel-Gas-Gemisch,
eine erfindungsgemäße Radar-Messvorrichtung, wobei die Führung zwischen dem Radar-Sender und dem Radar-Gegenpunkt angeordnet ist, und von dem Radar-Sender Radarstrahlen entlang seiner optischen Achse durch das Partikel-Gas-Gemisch zu dem Radar-Gegenpunkt ausgesandt werden.

Gemäß einer Ausbildung ist das Partikel-Gas-Gemisch ausgebildet ist als
- ein Materialstrom, der einen Luftstrom mit aufgenommenen Partikeln aufweist, und der Materialführungsbereich eine Materialführung, z.B. ein Rohr ist, oder ein Schüttgut, das von einer Schüttgut-Ausgabe ausgegeben wird.

Gemäß einer Ausbildung der Förder- und Dosiereinrichtung ist die Steuer- und Auswerteeinrichtung ausgebildet, eines oder mehrere der folgenden Ausgabesignale auszugeben:
ein Warnsignal, insbesondere als optisches und/oder akustisches Signal,
ein erstes Steuersignal für eine Materialentnahme, wobei die Förder- und Dosiereinrichtung eine Entnahmeeinrichtung , z. B. eine Luftdüse, aufweist, die von der Steuer- und Auswerteeinrichtung angesteuert wird, zum Entnehmen eines Teiles des Partikel-Gas-Gemisches,
ein zweites Steuersignal zum Anhalten des Extruders und/oder der Förder- und Dosiereinrichtung.

Die Erfindung betrifft weiterhin eine Fertigungsstrecke, die eine erfindungsgemäße Förder- und Dosiereinrichtung und einen Extruder aufweist, wobei durch die Förder- und Dosiereinrichtung das Partikel-Gas-Gemisch dem Extruder zuführbar ist und der Extruder ausgebildet ist, aus dem Partikel-Gas-Gemisch nachfolgend ein Extrusionsprodukt auszubilden.

Die Erfindung betrifft weiterhin ein Verfahren zum Extrudieren eines Extrusionsproduktes, bei dem ein Partikel-Gas-Gemisch des Ausgangsstoffes der Extrusion vermessen wird. Hierbei ist vorzugsweise vorgesehen, dass ein oder mehrere der folgenden Schritte ausgeführt werden:
- Vermessen des Extrusionsproduktes mittels einer Extrusions- Radarmessvorrichtung und Ausgabe eines Extrusions-Messsignals, mit einer Ermittlung von Eigenschaften des Extrusionsproduktes aus dem Extrusions-Messsignals und einer gemeinsamen Bewertung und/oder Vergleich der Eigenschaften des des Extrusionsproduktes zusammen mit dem Messsignal der Radar-Messvorrichtung,
- bei Erkennen eines Fremdkörpers Ansteuern einer Entnahmeeinrichtung zur Entnahme des Fremdkörpern aus einem Partikel-Gas-Gemisch.

Die Erfindung wird im Folgenden anhand der beiliegenden Zeichnungen an einigen Ausführungsformen näher erläutert. Es zeigen:
- Fig. 1: eine Förder- und Dosiereinrichtung mit einem Materialstrom und einer Messvorrichtung mit ihrem Signaldiagramm gemäß einer Ausführungsform in Reflexionsmessung;
- Fig. 2: die Förder- und Dosiereinrichtung aus Fig. 1 mit einem Fremdkörper im Materialstrom;
- Fig. 3: eine weitere Förder- und Dosiereinrichtung mit Dopplermessung;
- Fig. 4: eine Fertigungsstrecke mit der Förder- und Dosiereinrichtung und einem Extruder: und
- Fig. 5: eine Förder- und Dosiereinrichtung mit einem Materialstrom und einer Messvorrichtung mit Signaldiagramm gemäß einer weiteren Ausführungsform in Transmissionsmessung.

Eine Förder- und Dosiereinrichtung 1 dient zur Zufuhr eines Partikel-Gas-Gemisches, das hier als Materialstrom 2 aus einem Luftstrom (bzw. Gasstrom) und in dem Luftstrom 3 aufgenommenen Partikeln 4 gebildet ist, die somit vom Luftstrom 3 in der Transportrichtung T mitgerissen werden. Die Transportrichtung T kann grundsätzlich beliebig sein, z. B. nach unten, horizontal in der Ebene, oder auch mit Steigung nach oben. Alternativ zu einem Materialstrom 2 können die Partikel 4 des Materialstroms 2 z.B. frei durch die Luft fallen, rutschen oder sich durch die Schwerkraft oder eine externe Krafteinleitung bedingte schnell oder langsam bewegen, z.B. bei einer Zuführung zu einem Extrudertrichter. Die Zuführung kann z.B. auch durch eine Rüttelplatte, eine Rutsche bzw. Trichter oder Förderschnecke erfolgen.

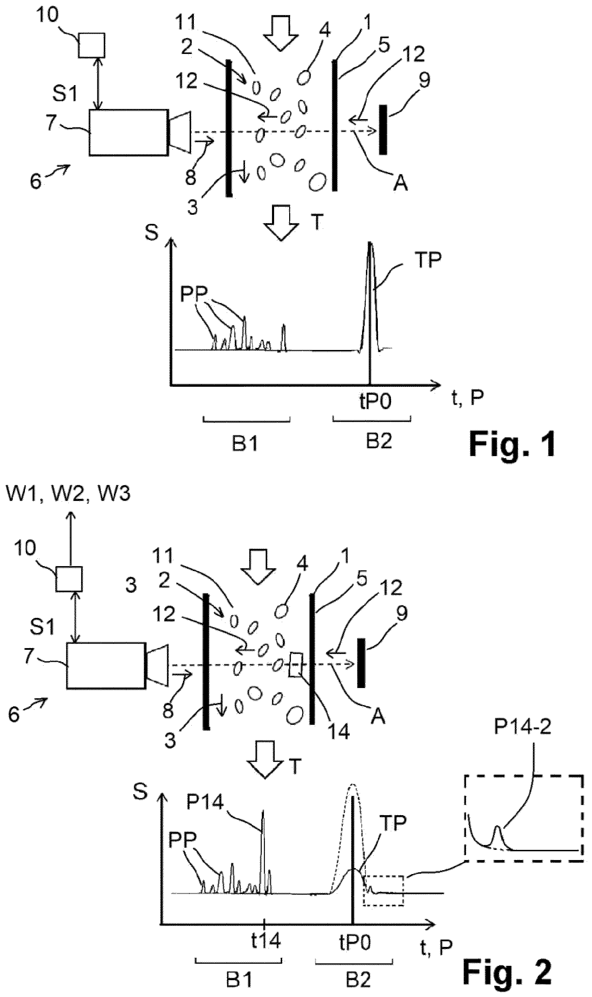

In der Förder- und Dosiereinrichtung 1 ist eine Radar-Messvorrichtung 6 vorgesehen, die einen Radar-Transceiver 7, einen Reflektor 9 sowie eine Steuer- und Auswerteeinrichtung 10 aufweist. Der Radar-Transceiver 7 gibt Radarstrahlen 8 bzw. THz-Strahlung entlang seiner optischen Achse A aus, wobei der Reflektor 9 auf der optischen Achse A vorgesehen ist und senkrecht zur optischen Achse verläuft, so dass der Reflektor 9 die Radarstrahlen 8 zurück zum Radar-Transceiver 7 (total-) reflektiert. Der Reflektor 9 kann z.B. plan oder auch gekrümmt, z.B. konkav gekrümmt zur fokussierenden Bündelung, und aus unterschiedlichem Material, vorzugsweise aus Metall oder einer Metallbeschichtung, ausgebildet sein. Statt Metall kann aber auch ein anderes signifikant reflektierendes Material vorgesehen sein, d.h. die Totalreflektion kann auch weniger als 100% der Intensität betragen. Die optische Achse A ist gemäß der Ausführungsform der Fig. 1, 2 senkrecht zur Transportrichtung T ausgerichtet, insbesondere auch senkrecht zu einer Führung 5, die z. B. ein Rohr oder eine Leitung ist. Die Führung 5 ist aus einem nicht-leitfähigen Material, z. B. als Schlauch oder Rohr aus Kunststoff oder Gummi, ausgebildet, die für die Radarstrahlen 8 transparent ist.

Der Radar-Transceiver 7 gibt sein Messsignal S1 an eine Steuer- und Auswerteeinrichtung 10, die das Messsignal S1 aufnimmt und auswertet. In Figur 1 ist hierzu die Signalamplitude S in Abhängigkeit der Laufzeit t bzw. einer Peak-Position P gezeigt. Die Signalamplitude kann auch auf Basis eines FMCW-Radars als Amplitude über Frequenz vorliegen. Hierbei können z. B. ergänzende Reflexionen an den Wänden der Führung 5 auftreten, die in dem Signaldiagramm nicht gezeigt sind. Das Signaldiagramm weist einen mittleren Diagrammbereich B1 auf, in dem Teil-Reflexionen an den Partikeln 4 auftreten. Die Partikel 4 sind aus einem für die Radarstrahlen 8 grundsätzlich durchlässigen Material, der einen gegenüber Luft unterschiedlichen Brechungsindex n4 von z. B. 1,5 bis 2 aufweist. Die Partikel 4 werden einem Extruder zugeführt und können entsprechend z. B. aus Kunststoff, Gummi, einem Additiv wie Calciumcarbonat, z. B. auch Fasern, z. B. Glasfasern, weiterhin auch Holzpartikel, gebildet sein. Hierbei sind die Partikel 4 insbesondere als rieselfähiges Schüttgut ausgebildet, z. B. als Granulat, Körner, Flakes oder Pulver.

Bei Eintritt der Radarstrahlen 8 in ein Partikel 4 und beim nachfolgenden Austritt aus dem Partikel 4 in den umgebenden Luftstrom 3 treten Teilreflexionen an den Grenzflächen auf, die je nach Lage und Ausrichtung der Grenzflächen in unterschiedliche Richtungen verlaufen. Somit wird aufgrund der hohen Anzahl von Partikeln 4, durch die die Radarstrahlen 8 treten, immer auch ein Teil der Reflexionsstrahlen 12 wieder entlang der optischen Achse A zurück zum Transceiver 7 reflektiert und in dem Signaldiagramm in einem mittleren Diagramm-Bereich B1 detektiert. Weiterhin wird der Radarstrahl 8 an dem Reflektor 9 total reflektiert und entlang der optischen Achse A zurück zu dem Transceiver 7 geführt, so dass im Signaldiagramm ein Totalreflexions-Peak TP bei der Laufzeit tP0 auftritt. Der mittlere Diagramm-Bereich B1 fluktuiert aufgrund des sich zeitlich ändernden Materialstroms 4, da jeweils eine unterschiedliche Anzahl von Partikeln 4 durch die optische Achse A tritt, mit unterschiedlicher Ausrichtung.

Zunächst wird vorteilhafterweise in einem Schritt St1 eine Leermessung durchgeführt, bei der somit die Anordnung von Figur 1 zunächst ohne den Materialstrom 2, d. h. mit leerem Rohr bzw. Führung 5, vermessen wird. Somit sind im mittleren Diagramm-Bereich B1 keine Reflexionen zu erwarten. Die Position bzw. Laufzeit tP0 des Totalreflexionspeaks TP gibt somit die direkte Laufzeit ohne eine Verzögerung durch Materialpartikel wieder. Nachfolgend wird der Materialstrom 2 durch die Führung 5 und somit den Messraum 11 geführt (Schritt St2), und eine fortlaufenden Radarmessung durchgeführt (Schritt St3). In dem Signaldiagramm der Figur 1 mit dem Materialstrom 2, d. h. einer statistischen Anzahl und Dicke von Partikeln 4 in der optischen Achse A, verschiebt sich entsprechend der Totalreflexions-Peak TP nach hinten, da die Radarstrahlen 8 durch die Partikel 4 des Materialstroms 2 treten und aufgrund des höheren Brechungsindex und somit geringerer Lichtgeschwindigkeit in dem Material der Partikel 4 zeitlich verzögert werden. Diese Laufzeitverzögerung kann nachfolgend ergänzend herangezogen werden, da sie die Materialmenge im optischen Pfad angibt.

Weiterhin kann der Materialstrom 2 bewertet werden, indem in Fig. 1 z. B. ein Integral des mittleren Diagrammbereichs B1 ermittelt wird, d. h. die Summe der Flächenbeiträge der Teilreflexionen PP, für eine Bewertung der Zuführrate des Materialstroms 4, z.B. als Masse pro Zeit.

In Figur 2 enthält der Materialstrom 2 einen Fremdkörper 14 aus Metall, der sich mit den weiteren Partikeln 4 im Luftstrom 3 mitbewegt und hier gerade durch die optische Achse A tritt. Der Fremdkörper 14 wird im Allgemeinen von seinen Ausmaßen her nicht den gesamten Radarstrahl 8 abdecken und auch nur z. B. zeitweise den Radarstrahl 8 entlang der optischen Achse A zurückreflektieren. Im mittleren Diagrammbereich B1 erscheint zeitweise, wenn der Fremdkörper 14 geeignet ausgerichtet ist, entsprechend ein Peak P14 zu einem Zeitpunkt tP14, bzw. in der entsprechenden Peak-Position. Weiterhin wird durch die Reflexion der Totalreflexions-Peak TP entsprechend geschwächt, wie ein Vergleich mit dem in Figur 2 gestrichelt eingezeichneten Totalreflexions-Peak der Figur 1 zeigt. Diese Schwächung tritt allgemein durch den Fremdkörper 14 ein, auch wenn er nicht senkrecht zur optischen Achse A ausgerichtet ist.

Der Fremdkörper 14 in Figur 2 führt somit zu signifikanten und typischen Veränderungen des Signaldiagramms: Eine relevante zeitliche Verschiebung des Totalreflexions-Peaks TP gegenüber der Leermessung ist durch den Fremdkörper 14 zunächst nicht bzw. vernachlässigbar zu erwarten, anders als z. B. bei einer großen Menge von Partikeln 4 oder einem größeren Fremdkörper aus einem optisch sehr dichten Material mit hohem Brechungsindex. Charakteristisch ist insbesondere die Detektion des Peaks P14, der von der Signalamplitude S her deutlich größer ausfallen kann, wie in Fig. 2 gezeigt. Aber auch ohne direkte Ermittlung eines Peaks P14 kann eine entsprechende statistische Aussage bzw. Bewertung des mittleren Diagramm-Bereichs B1 erfolgen.

So kann bereits ein Integral des mittleren Diagramm-Bereichs B1 ins Verhältnis gesetzt werden zur Höhe bzw. Fläche des Totalreflexions-Peaks TP, so dass eine deutliche Verschiebung dieses Verhältnisses, d. h. der Signalhöhe bzw. des Integrals über die Signalhöhe des mittleren Diagramm-Bereichs B1 im Verhältnis zu der Fläche des Totalreflexions-Peaks TP.

Weiterhin kann eine statistische Auswertung, z.B. der Standard-Abweichung oder Streuung des mittleren Signalbereichs B1 erfolgen, die sich bei einem reflektierenden Fremdkörper 14 deutlich ändern kann; der Peak P14 kann z.B. zu einer höheren Standard-Abweichung des mittleren Diagrammbereichs B1 des Signaldiagramms der Fig. 2 führen, wie aus Fig. 2 ersichtlich ist.

Allgemein wird der mittlere Diagrammbereich B1 in seinen Merkmalen - auch bei im Wesentlichen konstantem Materialstrom 4 - um statistische Werte schwanken; so wird z. B. der Flächengehalt des mittleren Diagrammbereichs B1 in Abhängigkeit der Zeit um einen statistischen Mittelwert schwanken, weiterhin werden auch die Standardabweichungen schwanken. Bei Auftreten eines Fremdkörpers 14 können sich deutliche Änderungen in diesen statistischen Werten ergeben, so dass eine Änderung bereits qualitativ als das Einwirken eines Fremdkörpers 14 bewertet werden kann, ohne genauere Aussagen über dessen Position und Größe treffen zu können.

Weiterhin kann durch den Fremdkörper 14 auch die Form des Totalreflexions-Peaks TP geändert werden: So können insbesondere Mehrfach-Reflexionen auftreten, wenn ein von dem Reflektor 9 zurück entlang der optischen Achse A geworfener Reflexionsstrahl 12 auf den Fremdkörper 14 trifft und zurück zu dem Reflektor 9 reflektiert wird, so dass er nachfolgend zu dem Radar-Transceiver 7 gelangt. Dieser Signalbeitrag kann somit als Beitrag P14-2 an der hinteren Flanke des Totalreflexions-Peaks TP auftreten, wie in der Ausschnittsvergrößerung der Fig. 2 gezeigt ist, wobei der Beitrag im Allgemeinen nur zu einer geringeren Formänderung führen wird, die z.B. durch statistische Bewertung ermittelt werden kann.

Somit kann eine Bewertung der Form des Totalreflexions-Peaks TP zur Detektion des Fremdkörpers 14 verwendet werden. Hierbei ist insbesondere eine qualitative Bewertung möglich, bei der aufgrund einer deutlichen Formänderung des Totalreflexions-Peaks TP auf das Vorhandensein zumindest eines Fremdkörpers 14 geschlossen wird. Insbesondere sind Bewertungen über eine längere Messzeit möglich. Auch hierbei können wiederum statistische Analysen zur zeitlichen Veränderung der TP herangezogen und bewertet werden.

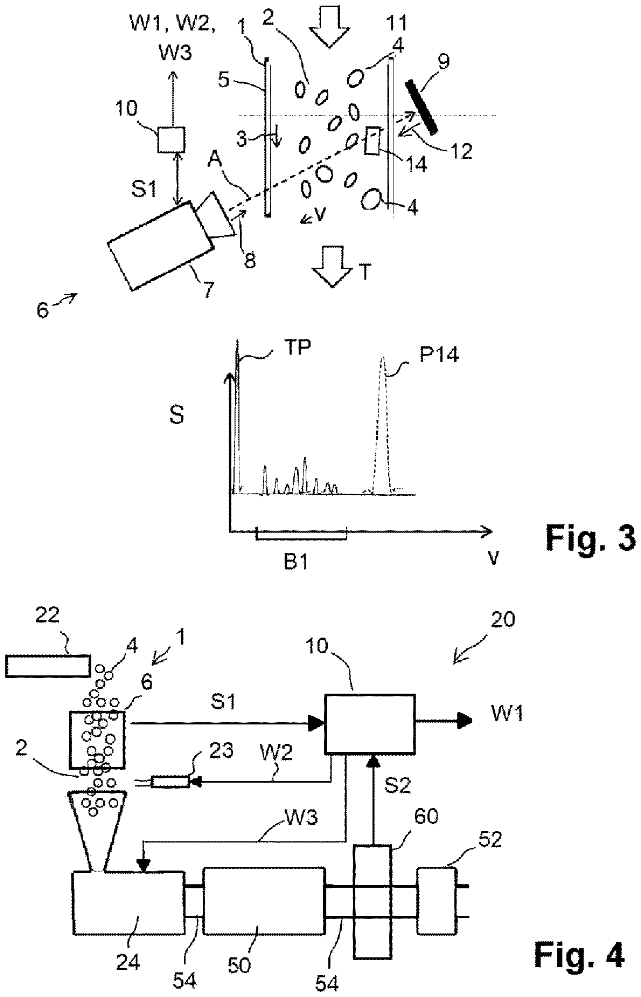

Bei der Ausführungsform der Figur 3 ist die optische Achse A nicht senkrecht zur Transportrichtung T, sondern unter einem Messwinkel ausgerichtet, wobei sie aber weiterhin senkrecht auf den Reflektor 9 trifft. Hier kann zunächst eine der Figur 1, 2 entsprechende Vermessung erfolgen, da auch hier die Partikel 4 durch ihre Teilreflexionen ausgewertet werden können, wobei die Messstrecke bzw. Wegstrecke der Radarstrahlen 8 durch die Führung 5 entsprechend dem Messwinkel vergrößert ist. Somit ist in der Messanordnung von Figur 3 zunächst die gleiche Bewertung des Materialstroms 2 und eine Ermittlung des Fremdkörpers 14 entsprechend Figur 2 möglich. Weiterhin können an den Materialpartikeln 4 Doppler-Messungen erfolgen, da sie eine signifikante Geschwindigkeitskomponente v parallel zur optischen Achse A aufweisen. Figur 3 zeigt ein entsprechendes Signaldiagramm, bei dem die Signalamplitude in Abhängigkeit der Geschwindigkeit v aufgetragen ist, wobei v hier der Geschwindigkeits-Komponente entlang der optischen Achse A entspricht und nicht der Fall-Geschwindigkeit in Transportrichtung T.

Somit kann hieraus die Transportgeschwindigkeit der Partikel 4 ermittelt werden. Hier ist der Totatreflexionspeak TP bei der Geschwindigkeit Null erkennbar, da er sich nicht bewegt. In dem mittleren Diagrammbereich B1 der Doppler-Messung treten die statistischen Geschwindigkeitsschwankungen der Partikel 4 auf.

Wenn der Fremdkörper 14 hierbei aufgrund seines Gewichtes, z. B. als Metallpartikel, mit einer anderen Geschwindigkeit durch die Führung 5 gelangt, z. B. bei einem Fallstrom bzw. der Transportrichtung T nach unten mit einer deutlich höheren Geschwindigkeit v14, so kann in dem Signaldiagramm der Figur 3 ein Messpeak P14 bei der höheren Geschwindigkeit v14 ermittelt werden. Weiterhin kann aber z.B. auch ein Metall-Staubkorn, z.B. aufgrund seiner geringeren Geschwindigkeit erkannt werden.

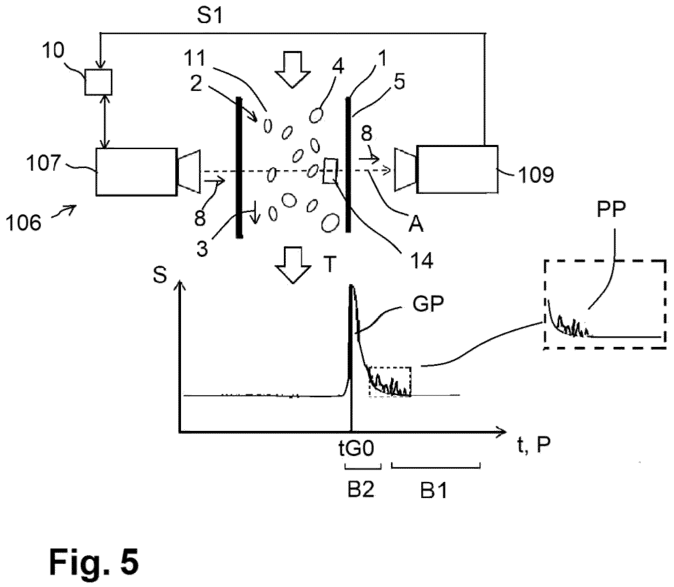

Fig. 5 zeigt eine weitere Ausführungsform einer Förder- und Dosiereinrichtung , mit einer Messvorrichtung 106 für eine Transmissionsmessung. Ein Radar-Sender 107 gibt Radar-Strahlen 8 durch den Messraum 11, durch den wiederum der Materialstrom 2 geleitet wird. Anders als in der Ausführungsform der Fig. 1 ist der Radar-Sender 107 nicht zur Detektion von Strahlung vorgesehen. Auf der gegenüber liegenden Seite ist als Radar-Gegenpunkt ein Radar-Receiver bzw. Radar-Empfänger 109 vorgesehen, der die durch den Messraum 11 gelangten Radarstrahlen als Messstrahlung detektiert. Fremdkörper 14 lenken die Radarstrahlen 8 ab bzw. reflektieren die Radarstrahlen 8 in eine Richtung ab, so dass die transmittierte Strahlung abgeschwächt wird.

In dem Signaldiagramm der Messung von Fig. 5 erscheint zunächst zu dem Zeitpunkt tG0 ein scharfer Transmissions-Grundpeak GP der nicht absorbierten Radarstrahlen 8, für den selbst wiederum entsprechend den vorherigen Ausführungsformen ein Bereich B2 zur Auswertung festgelegt werden kann. An der fallenden hinteren Flanke schließt sich ein Bereich B1 mit Beiträgen an, die durch Verzögerungen kommen, die insbesondere beim Durchtritt durch die Partikel 4 auftreten, in Fig. 5 ist der Bereich B1 stark auseinander gezogen gezeigt; er wird sich insbesondere direkt an der fallenden Flanke ausbilden. Die Fremdkörper führen hier zu einer deutlichen Abschwächung der Signalamplitude, da jede Reflexion die Signalamplitude des Transmissionssignals abschwächt. Beträge in der Signalamplitude durch Reflexion eines Fremdkörpers 14 wie in Fig. 2 können somit nicht auftreten, wobei die zusätzlichen Reflexions-Beiträge in Fig. 2 auch nur auftreten, wenn ein Fremdkörper 14 genau entlang der optischen Achse A reflektiert. Wenn entsprechend bei einer Messung nach Figur 2, 3 oder 5 ein auffälliges Messsignal ermittelt wird, kann nachfolgend als Reaktion hierauf:
eine Meldung erfolgen, z. B. als optisches oder akustisches Warnsignal W1, weiterhin kann ein Steuersignal W2 ausgegeben werden, um den Fremdkörper 14 zu entfernen oder eine Fertigungsstrecke angehalten werden, wie nachfolgend in Figur 4 gezeigt ist.

Figur 4 zeigt eine Fertigungsstrecke 20, mit einer Materialzuführung 22, die den Materialstrom 2 ausgibt, einer ersten Radar-Messvorrichtung 6, die den Materialstrom 2 vermisst, einer Entnahmeeinrichtung 23 sowie einem Extruder 24. Die Materialzuführung 22 gibt somit das Schüttgut mit den Partikeln 4 aus, das dann als Materialstrom 2 transportiert und von der ersten Radar-Messvorrichtung 6 vermessen wird. Statt eines Materialstrom 2, bei dem die Partikel von einem Luftstrom oder Gasstrom mitgerissen werden, kann auch ein anderes Partikel-Gas-Gemisch vermessen werden, wobei z.B. von einer Materialausgabe Schüttgut ausgegeben und vermessen wird, das z.B. fällt und/oder rutscht, insbesondere durch die Schwerkraft oder durch eine externe Krafteinleitung. Somit kann für die Materialzuführung auch z.B. eine Rüttelplatte, eine Rutsche, ein Trichter oder eine Förderschnecke eingesetzt werden, der Extruder 24 gibt ein Extrusionsprodukt 54, z.B. ein Rohr, aus, das dann z.B. von einem Abzieher 52 durch eine Kühleinrichtung 50 geführt und in einer Extrusions-Radarmessvorrichtung 60 auf relevante Eigenschaften wie Durchmesser, Schichtdicken, Ovalität, Brechungsindex des Materials, vermessen wird, wobei die Extrusions-Radarmessvorrichtung 60 ein Extrusions-Messsignal S2 an die Steuereinrichtung 20 ausgibt, die auch das Messsignal S1 aufnimmt.

Die Steuer- und Auswerteeinrichtung 10 der Radar-Messvorrichtung 6 kann hierbei zunächst gemäß Figur 1 und/oder Figur 3 und/oder Fig. 5 den ordnungsgemäßen Materialstrom 2 vermessen. Wenn die Steuer- und Auswerteeinrichtung 10 einen Fremdkörper 14 detektiert, kann sie zum einen ein Warnsignal W1, z. B. optisch und/oder akustisch ausgeben, damit ein Bediener hierauf aufmerksam wird. Weiterhin kann sie als nächste Stufe mit dem ersten Steuersignal W2 eine Entnahmeeinrichtung 23 ansteuern, z. B. eine Luftdüse, die senkrecht zur Transportrichtung T angeordnet ist und in dem relevanten Bereich des Materialstroms 2 durch einen Luftstoß das Material zeitweise entfernt. Somit wird der durchgängige Materialstrom 2 zeitweise unterbrochen; wobei hier mit dem Extruder 24 eine Produktionsmaschine versorgt wird, die das aufgenommene Gut zunächst aufnimmt bzw. sammelt und aufschmilzt, so dass kurzzeitige Unterbrechungen des Materialstroms 3 nicht relevant sind.

Als nächste Stufe kann durch ein Signal W3 auch der Extruder 24 angehalten werden. Weiterhin kann die Radar-Vermessung des Extrusionsproduktes 54 durch die Radarmessvorrichtung 60 mit der ersten Messung in Bezug gesetzt werden kann, d.h. eine gemeinsame Bewertung der Messsignale S1 und S2 erfolgen.

### Bezugszeichenliste

- 1: Förder- und Dosiereinrichtung
- 101: Förder- und Dosiereinrichtung bei Transmissionsmessung
- 2: Partikel-Gas-Gemisch, z.B. Materialstrom
- 3: Luftstrom
- 4: Partikel
- 5: Führung, Rohr
- 6: Radar-Messvorrichtung
- 106: Radar-Messvorrichtung bei Transmissionsmessung
- 7: Radar-Transceiver
- 107: Radar-Sender bei Transmissionsmessung

- 8: Radarstrahl
- 9: Reflektor
- 109: Radar-Receiver bei Transmissionsmessung
- 10: Steuer- und Auswerteeinrichtung
- 12: Reflexionsstrahl
- 14: Fremdkörper
- 20: Fertigungsstrecke
- 22: Materialzuführung, z.B. Zuführeinrichtung
- 23: Entnahmeeinrichtung. Luftdüse
- 24: Extruder
- 50: Kühlvorrichtung
- 52: Abzieher
- 54: Extrusionsprodukt
- 60: Extrusions-Radarmessvorrichtung 60

- W1: Warnsignal
- W2: Steuersignal
- W3: Steuersignal
- A: optische Achse
- B1: Diagramm-Bereich
- T: Transportrichtung
- S1: Messsignal
- S2: Extrusions-Messsignal
- S: Signalamplitude
- TP: Totalreflexions-Peak
- PP: Teilreflexions-Peaks
- tP0: Zeitpunkt des Totalreflexions-Peaks
- T14: Peak des Fremdkörpers 14
- V: Geschwindigkeitskomponente bei Doppler-Messung
- GP: Transmissions-Grundpeak
- TG0: Totalreflexions-Peak der Leermessung

## Patentansprüche

1. Verfahren zur Detektion von Fremdkörpern (14) in einem Partikel-Gas-Gemisch (2), mit mindestens folgenden Schritten:
- Zuführen eines Partikel-Gas-Gemisches (2) aus Partikeln (4) in einem Gas (3) durch einen Messraum (11) zwischen einem Radar-Sender (7, 107) und einem Radar-Gegenpunkt (9, 109) einer Radar-Messvorrichtung (6, 106) (Schritt ST2),
- Radarmessung, bei der von dem Radar- Sender (7, 107) Radarstrahlen (8) entlang seiner optischen Achse (A) durch den Messraum (11) und das Partikel-Gas-Gemisch (2) zu dem Radar-Gegenpunkt (9, 109) ausgegeben werden und Messtrahlen, die den Messraum (11) zumindest einmal durchquert haben, gemessen werden, wobei ein Messsignal (S1) mit einer Signalamplitude (S) erzeugt wird, die einen Grundpeak (TP, GP) enthält (ST3),
- Auswertung der Signalamplitude (S) und Ermittlung, ob in dem Partikel-Gas-Gemisch (2) ein Fremdkörper (14) oder eine hohe Wahrscheinlichkeit für einen Fremdkörper (14) erkannt wird (ST4),
- bei Ermittlung eines Fremdkörpers (14) oder einer hohen Wahrscheinlichkeit für einen Fremdkörper (14) Ausgabe eines Ausgabesignals (W1, W2, W3) (St5).

2. Verfahren nach einem der vorherigen Ansprüche, **dadurch gekennzeichnet, dass**
bei Detektion eines Fremdkörpers (14) oder einer hohen Wahrscheinlichkeit für einen Fremdkörper (14) eines oder mehrere der folgenden Ausgabesignale ausgegeben werden:
- ein Warnsignal (W1), z. B. optisch und/oder akustisch,
- ein erstes Steuersignal (W2) an eine Entnahmeeinrichtung (23), z. B. eine Luftdüse, zum Entnehmen eines Teils des Partikel-Gas-Gemischs (2) mit dem detektierten Fremdkörper (14) oder der er hohen Wahrscheinlichkeit für einen Fremdkörper (14),
- ein zweites Steuersignal (W3) zum Anhalten einer Fertigungsstrecke (20) oder eines Extruders (24).

3. Verfahren nach einem der vorherigen Ansprüche, **dadurch gekennzeichnet, dass** die Radarmessung fortlaufend während der Zuführung des Materials erfolgt, wobei in der Radarmessung weiterhin Eigenschaften des ordnungsgemäßen Partikel-Gas-Gemischs (2) ermittelt werden, z. B. ein oder mehrere der folgenden Eigenschaften:
ein Materialdurchsatz als Materialmenge pro Zeiteinheit,
eine Transportgeschwindigkeit (v) der Partikel (4) und/oder eines Gasstroms (3) des Gases,
eine Größe der Partikel (4),
ein Brechungsindex der Partikel (4).

4. Verfahren nach einem der vorherigen Ansprüche, **dadurch gekennzeichnet, dass** ein Vergleich von Mess-Signalen (S1) mehrerer Messungen, insbesondere zeitlich aufeinander folgender Messungen erfolgt, wobei eine Bewertung erfolgt:
- unter Ermittlung einer zeitlichen Änderung oder eines zeitlichen Mittelwertes und Vergleich neuer Messungen mit dem Mittelwert, oder
- unter Ermittlung einer Standardabweichung in Abhängigkeit der Zeit oder der Laufzeit (t) in der Signalamplitude (S).

5. Verfahren nach einem der vorherigen Ansprüche, **dadurch gekennzeichnet, dass** für eine Ermittlung eines Fremdkörpers (14) eine Bewertung des Grundpeaks (TP, GP) in dem Messsignal (S1) erfolgt.

6. Verfahren nach einem der vorherigen Ansprüche, **dadurch gekennzeichnet, dass**
der Radar-Sender als Radar-Transceiver (7) und der Radar- Gegenpunkt als Reflektor (9) ausgebildet ist,
wobei der Radar-Transceiver (7) von den Partikeln (4) reflektierte und von dem Reflektor (9) reflektierte und zurück durch den Messraum (11) gelangte Radarstrahlen (8) als Messstrahlen detektiert, und
als Grundpeak ein Total-Reflexionspeak (TP) des Reflektors (9) gemessen wird.

7. Verfahren nach einem Anspruch 6, **dadurch gekennzeichnet, dass** ein Fremdkörper (14) oder eine hohe Wahrscheinlichkeit für einen Fremdkörper (14) ermittelt wird durch
- Auswertung eines mittleren Detektionsbereichs (B1) des Messsignals, wobei der mittlere Detektionsbereich (B1) in der Laufzeit (t) vor dem Total-Reflexionspeak (TP) liegt und Teil-Reflektionspeaks (PP) der Partikel (4) enthält, die von Teilreflexionen des ausgesandten Radarstrahls (8) an den Grenzflächen der Partikel (4) gebildet sind. und/oder
- eine Detektion direkter Reflexionsstrahlen (12), die bei Einfall der von dem Radar-Transceiver (7) ausgesandten Radarstrahlen (8) von dem Fremdkörper (14) zurück zu dem Radar-Transceiver (7) reflektiert werden, insbesondere als Fremdkörper-Reflexionspeak (P14) in dem mittleren Detektionsbereich (B1).
und/oder
- Ermitteln einer zeitlich lokalen Abschwächung der Intensität im Signaldiagramm.

8. Verfahren nach Anspruch 6 oder 7, **dadurch gekennzeichnet, dass** ein Fremdkörper-Reflexionspeak (P14) in dem mittleren Diagrammbereich (B1) des Messsignals (S1) durch eine Bewertung oder einen Vergleich der Signalamplitude (S) ermittelt wird, insbesondere durch eine oder mehrerer der folgenden Bewertungen:
- als Reflexionspeak (P14) mit höherer Signalamplitude (S) als die Teilreflexions-Peaks (PP) der Partikel (4) oder als ein Durchschnitt der Teilreflexions-Peaks (PP) der Partikel (4),
- eine statistische Bewertung des mittleren Diagrammbereichs (B1), insbesondere unter Ermittlung einer Standard-Abweichung oder Streuung,
- eine Bewertung einer Gesamtintensität, insbesondere als Integration der Signalamplitude über den mittleren Diagrammbereich (Bi).

9. Verfahren einem der Ansprüche 6 bis 8, **dadurch gekennzeichnet, dass** eine Struktur der Signalamplitude (S) bewertet wird , wobei als Struktur bewertet wird
- der Totalreflexions-Peak (TP), insbesondere eine hintere Flanke des Totalreflexions-Peaks (TP), wobei in Abhängigkeit von Änderungen der Struktur des Totalreflexions-Peaks (TP) auf eine Wahrscheinlichkeit für einen Fremdkörper (14) geschlossen wird,
und/oder
- Signalbeiträge (P14-2) der hinteren Flanke und/oder Signalbeiträge in einem relevanten Abstand hinter einem Maximum des Totalreflexions-Peaks (TP) ermittelt werden, wobei bei Ermitteln relativ hoher Beiträge auf eine Mehrfach-Reflexion des Radarstrahls (8) an dem Reflektor (9) und nachfolgend dem Fremdkörper (14) erkannt wird.

10. Verfahren nach einem der Ansprüche 1 bis 5, **dadurch gekennzeichnet, dass**
der Radar- Gegenpunkt als gegenüberliegender Radar-Empfänger (109) ausgebildet ist und
eine Messung in Transmission von dem Radar-Sender (107) durch den Messraum (11) zu dem Radar-Empfänger (109) erfolgt,
wobei der Radar-Empfänger durch den Messraum (11) transmittierte Radarstrahlen als Messstrahlen misst, und
als Grundpeak ein Transmissions -Grundpeak (GP) gemessen wird.

11. Verfahren nach Anspruch 10, **dadurch gekennzeichnet, dass** eine hintere Flanke des Grund-Peaks (GP) bewertet wird, wobei in Abhängigkeit von Änderungen der hinteren Flanke des Grund-Peaks (TP, GP) auf einen Fremdkörper (14) oder eine Wahrscheinlichkeit für einen Fremdkörper (14) geschlossen wird.

12. Verfahren nach einem der vorherigen Ansprüche, **dadurch gekennzeichnet, dass** die Partikel (4) aus einem Zuführmaterial für einen Extruder (24) gebildet sind, z. B.:
ein Kunststoff-Material, insbesondere ein thermoplastisches Kunststoff-Material,
Gummi,
ein Additiv, z. B. Glasfasern, Kalziumcarbonat, Holzpartikel oder Holzpulver,
wobei das Material der Partikel (4) für den Radarstrahl (8) teildurchlässig ist und einen gegenüber Luft höheren Brechungsindex (n4) aufweist.

13. Verfahren nach einem der vorherigen Ansprüche, **dadurch gekennzeichnet, dass**
vor dem Schritt des Zuführens des Partikel-Gas-Gemisches (2) (St2)
- eine Radarmessung als Kalibriermessung durchgeführt wird, bei der der Messraum (11) ohne Partikel-Gas-Gemisch (2) vermessen wird (Schritt St1), und
bei der Bewertung (St4) das Messsignal (S1) die Kalibriermessung zum Vergleich mit dem Messsignal des Partikel-Gas-Gemisches (3) herangezogen wird, insbesondere für eine Ermittlung einer Gesamtlaufzeit-Verzögerung.

14. Verfahren nach Anspruch 13, **dadurch gekennzeichnet, dass** bei geringer Gesamtlaufverzögerung des Grundpeaks (TP, GP) und hoher Verringerung der Signalamplitude, insbesondere durch Vergleich mit Grenzwerten oder vorherigen Messungen, auf einen Fremdkörper (14) geschlossen wird.

15. Verfahren nach einem der vorherigen Ansprüche, **dadurch gekennzeichnet, dass** der Radarstrahl (8) nicht senkrecht zur Transportrichtung (T) oder einer Führung (5) des Partikel-Gas-Gemischs (3) erfolgt und eine Doppler-Messung des Partikel-Gas-Gemischs (3) erfolgt, wobei ein Fremdkörper (14) als Signalbeitrag bei einer höheren oder niedrigeren Transportgeschwindigkeit erfasst wird.

16. Radar-Messvorrichtung (6, 106), die aufweist
einen Radar-Sender (7, 107), einen Radar-Gegenpunkt (9, 109), einen zwischen dem Radar-Sender (7, 107) und dem Radar-Gegenpunkt (9, 109) gebildeten Messraum (11) und eine Steuer- und Auswerteeinrichtung (10),
wobei die Steuer- und Auswerteeinrichtung (10) ausgebildet ist, bei einem Verfahren nach einem der vorherigen Ansprüche zumindest folgende Schritte auszuführen:
die Schritte der Radarmessung (St2), der Auswertung der Signalamplitude und Ermittlung (St3), und der Ausgabe des Ausgabesignals (W1, W2, W3).

17. Radar-Messvorrichtung (6, 106) nach Anspruch 16, **dadurch gekennzeichnet, dass**
- der Radar-Sender als Radar-Transceiver (7), und der Radar-Gegenpunkt (9, 109) als Reflektor (9) ausgebildet ist, wobei der Radar-Transceiver (7) die Radarstrahlen ausgibt und die Messstrahlen (8) aufnimmt, oder
- der Radar-Gegenpunkt (9, 109) als Radar-Empfänger (109), der die von dem (9) ausgebildet ist, wobei der Radar-Empfänger durch den Messraum (11) transmittierte Radarstrahlen als Messstrahlen für eine Transmissionsmessung misst.
